# EUROPEAN PATENT SPECIFICATION

(11) **EP 4 084 210 B1**
(45) Date of publication and mention of the grant of the patent: **25.09.2024**
(21) Application number: 22169767.5
(22) Date of filing: 25.04.2022
(51) Int. Cl.: H01M 50/553, H01M 50/533, H01M 50/534, H01M 50/105

(54) **METHOD FOR FABRICATING LEAD TAB FOR SECONDARY BATTERY**
VERFAHREN ZUM HERSTELLEN EINER BLEIFAHNE FÜR EINE SEKUNDÄRBATTERIE
PROCÉDÉ DE FABRICATION D'UNE PATTE DE CONNECTEUR POUR BATTERIE SECONDAIRE

(30) Priority: 26.04.2021 KR 20210053523
(43) Date of publication of application: 02.11.2022
(73) Proprietor: NSM Co., Ltd., Chungcheongbuk-do (KR)
(72) Inventor: LEE, Ki Ok, Cheongju-si, Chungcheongbuk-do (KR); HAN, Min Gou, Cheongju-si, Chungcheongbuk-do (KR); JUNG, Heang Sun, Cheongju-si, Chungcheongbuk-do (KR)
(74) Representative: Frenkel, Matthias Alexander

(56) References cited:
- KR-A- 20150 116 315
- KR-A- 20190 078 863
- KR-B1- 101 698 564

## Description

### BACKGROUND

### 1. Technical Field

The present disclosure relates to a method for fabricating a lead tab, and more particularly, to a method for fabricating a lead tab for a secondary battery.

### 2. Related Art

In general, a secondary battery refers to a battery which can be repeatedly used through a discharging process of converting chemical energy into electrical energy and a charging process of converting electrical energy into chemical energy.

Examples of the secondary battery may include a nickel-cadmium (Ni-Cd) battery, a nickel-hydrogen (Ni-MH) battery, a lithium-metal battery, a lithium-ion (NLi-Ion) battery, and a lithium-ion (Li-Ion) Polymer Battery (hereafter, referred to as "LIPB").

Among the secondary batteries, the lithium secondary battery has a cycle life of about 500 or more times and a short charging time of about one or two hours, and is lighter by about 30 to 40% than the nickel-hydrogen battery, thereby making it possible to reduce the weight of a product. Furthermore, the lithium secondary battery has excellent energy density and the highest voltage per unit battery, which ranges from 3.0 to 3.7 V, among the existing secondary batteries. Thus, the lithium secondary battery may have characteristics optimized to mobile devices.

Such a lithium secondary battery may include an electrode assembly housed in a battery case, a lead tab electrically connected to electrode tabs of electrodes included in the electrode assembly and extended to the outside of the battery case, and an insulating film configured to electrically insulate the lead tab.

In particular, the insulating film may have one surface fused to the lead tab and the other surface corresponding to the opposite surface of the one surface and fused to the battery case, and may perform a function of sealing the interface between the lead tab and the battery case.

However, since the lead tab and the insulating film are made of different materials, there is a limitation in reliably fusing the insulating film to the lead tab.

In the related art, the surface of the lead tab has been chemically treated with a chemical, in order to improve the fusion performance between the lead tab and the insulating film.

However, the existing surface treatment technology may cause an environmental pollution problem because a toxic substance may be contained in the chemical used to treat the surface of the lead tab. In addition, the existing surface treatment technology may require a long time to treat the surface of the lead tab, thereby reducing the productivity of the secondary battery.

Therefore, there is a need for the development of a method of fabricating a lead tab which can improve the fusion performance between the lead tab and an insulating film without using a chemical, and thus minimize the environmental pollution and the defect rate while raising the productivity.

### [Related Art Document]

### [Patent Document]

Korean Patent No. 10-1586072 (registered on January 11, 2016)

KR 10-1698564 B1 discloses an electrode for a secondary battery and a manufacturing method thereof.

KR 10-2019-0078863 A discloses a negative electrode lead tab for a secondary battery including a metal terminal provided with a Cu sheet, a film layer formed by chromate treatment as a chemical conversion treatment on the surface of the metal terminal, and a bonding film surrounding at least a portion of the metal terminal.

KR 2015 0116315 A discloses a pouch-type secondary cell having a lead terminal, the lead terminal comprising a metal plate which is surface-treated by vacuum plasma processing.

### SUMMARY

The claimed invention can form a plurality of concave-concavo patterns for increasing the surface area of the lead tab by treating the surface of the lead tab, to which an insulating film is bonded to fused, with laser light, and thus can improve the fusion performance between the lead tab and the insulating film without using a chemical, which makes it possible to minimize the environmental pollution and the defect rate while raising the productivity.

The invention is defined by the appended claims.

The effects of the method for fabricating a lead tab according to the present disclosure will be described as follows.

According to the present disclosure, the plurality of concavo-convex patterns for increasing the surface area of the lead tab is formed by treating the surface of the lead tab, to which the insulating film is bonded or fused, with laser light, and thus improve the fusion performance between the lead tab and the insulating film without using a chemical, which makes it possible to minimize the environmental pollution and the defect rate while raising the productivity.

Furthermore, the concavo-convex patterns are formed on the surface of the processing area of the lead tab, to which the insulating film is fused or bonded, such that the surface area of the fused or bonded surface of the lead tab is increased, which makes it is possible to improve the fusion or bonding performance between the insulating film and the processing area of the lead tab.

Furthermore, when the insulating films are fused or bonded, bubbles formed at the interfaces between the insulating films and the processing area of the lead tab are discharged to the outside through the concavo-convex patterns, which makes it possible to prevent the bubbles from being contained in the interfaces.

### BRIEF DESCRIPTION OF THE DRAWINGS

FIG. 1 is a diagram for describing a method for fabricating a lead tab according to an embodiment of the present disclosure.
FIGS. 2A to 2C are diagrams for describing concavo-convex patterns of the lead tab according to the embodiment of the present disclosure.
FIG. 3 is a diagram for describing a laser etching device for forming concavo-convex patterns according to the present disclosure.

### DETAILED DESCRIPTION

Hereafter, the present disclosure will be described in more detail with reference to the drawings.

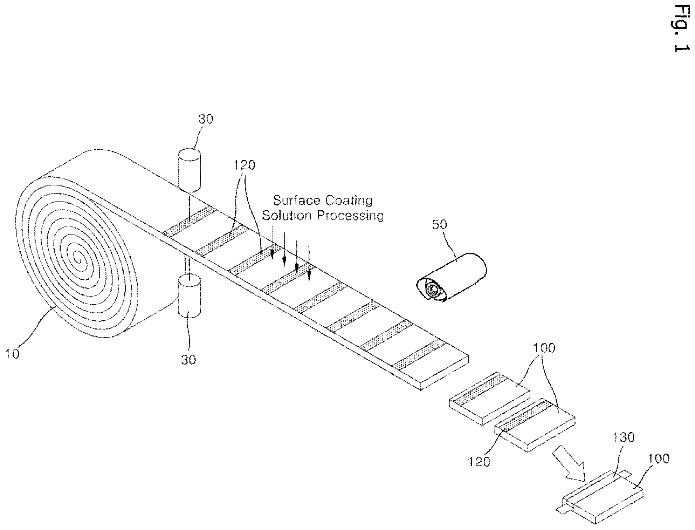

FIG. 1 is a diagram for describing a method for fabricating a lead tab according to the present disclosure.

As illustrated in FIG. 1, the method for fabricating a lead tab according to the present disclosure starts with a step of supplying a lead tab.

When a lead tab 100 is supplied, the lead tab 100 may be supplied from a lead tab material roll 10 wound in a roll shape.

Furthermore, when the lead tab 100 is supplied, the supply time of the lead tab 100 may be adjusted in order to supply a lead tab having a length corresponding to a preset pitch.

For example, the preset pitch may indicate the final pitch length of the lead tab 100 cut from the lead tab material roll.

Then, concavo-convex patterns 120 are formed by emitting laser light onto a predetermined region of the lead tab 100.

In an embodiment, the concavo-convex patterns 120 are formed by emitting laser light onto any one surface of the front and rear surfaces of the lead tab 100.

A laser etching device 30 may generate laser light according to a preset condition, and emit the generated laser light onto a predetermined region of the lead tab 100.

In another embodiment, when the concavo-convex patterns are formed, first concavo-convex patterns are formed by emitting first laser light onto a first region in the front surface of the lead tab, and second concavo-convex patterns are formed by emitting second laser light onto a second region in the rear surface of the lead tab.

The laser etching device 30 may be disposed at each of the front and rear surfaces of the lead tab 100, and generate laser light according to the preset condition and emit the generated laser light onto the predetermined region of the lead tab 100.

The first region of the front surface of the lead tab, where the first concave-convex patterns are formed, and the second region of the rear surface of the lead tab, where the second concavo-convex patterns are formed, may correspond to each other so as to completely overlap each other.

In some cases, the first region of the front surface of the lead tab, where the first concave-convex patterns are formed, and the second region of the rear surface of the lead tab, where the second concavo-convex patterns are formed, may correspond to each other so as to partially overlap each other.

The intensity of the first laser light and the intensity of the second laser light is different from each other.

The first and second laser lights may be emitted at the same time.

In some cases, the first and second laser lights may be emitted at different times.

Furthermore, the emission time of the first laser light and the emission time of the second laser light may be equal to each other.

In some cases, the emission time of the first laser light and the emission time of the second laser light may be different from each other.

Furthermore, the laser light may have an output value decided on the basis of the material of the lead tab, and the surface of the lead tab may be treated with the decided output value.

That is, when the material of the lead tab is a single metal, the lead tab may be processed surface treatment with a first output value, and when the material of the lead tab is a composite metal, the lead tab may be processed surface treatment with a second output value.

In this case, the first and second output values of the laser light may be equal to each other.

The first and second output values of the laser light are different from each other.

In this case, the second output value of the laser light may be larger than the first output value of the laser light.

For example, when the material of the lead tab is aluminum (Al), the surface of the lead tab may be processed with the first output value, and when the material of the lead tab is a composite metal of nickel and copper (NiCu), the surface of the lead tab may be processed with the second output value.

In this case, the second output value of the laser light may be larger than the first output value of the laser light.

The laser light may have an output value decided on the basis of preset surface roughness of the lead tab, and the lead tab may be processed surface treatment with the decided output value.

For example, the surface roughness of the lead tab may be set in advance, and the output value of the laser light may be decided according to the surface roughness. Then, the laser light having the decided output value may be emitted onto the surface of the lead tab, in order to form the concavo-convex patterns 120 on the surface of the lead tab such that the lead tab has the set surface roughness.

The first concavo-convex patterns may be the same as the second concavo-convex patterns.

In some cases, the first concavo-convex patterns may be different from the second concavo-convex patterns.

The area of the first region in which the first concavo-convex patterns are formed may be equal to the area of the second region in which the second concavo-convex patterns are formed.

In some cases, the area of the first region in which the first concavo-convex patterns are formed is different from the area of the second region in which the second concavo-convex patterns are formed.

When the first concavo-convex patterns and the second concavo-convex patters are completely formed during the process of forming the concavo-convex patterns 120, concavo-convex patterns may be formed in another region of the lead tab.

In this case, when the concavo-convex patterns 120 are formed, the concavo-convex patterns 120 including at least any one of a dot pattern, line pattern, lattice pattern, and combinations thereof may be formed.

Furthermore, the concavo-convex patterns 120 may be formed so that the formation region of the concavo-convex patterns has a width equal to or smaller than the width of an insulating film 130.

Furthermore, when the concavo-convex patterns 120 are formed, concavo-convex patterns having a uniform depth may be formed in a predetermined region of the lead tab 100.

For example, the depth of the concavo-convex patterns 120 range from 1% to 80% of the thickness of the lead tab 100, but is not limited thereto.

In some cases, when the concavo-convex patterns 120 are formed, concavo-convex patterns having non-uniform depths are formed in a predetermined region of the lead tab 100.

For example, when the concavo-convex patterns 120 are formed, the concavo-convex patterns 120 may be formed so that an edge region of the predetermined region of the lead tab 100 has a larger depth than a central region of the predetermined region.

For another example, when the concavo-convex patterns 120 are formed, the concavo-convex patterns 120 are formed so that the depths thereof gradually increase from the central region toward the edge region in the predetermined region of the lead tab 100.

Furthermore, when the concavo-convex patterns 120 are formed, the concavo-convex patterns 120 may be formed in the entire predetermined region of the lead tab 100.

In some cases, when the concavo-convex patterns 120 are formed, the concavo-convex patterns 120 are formed only in a part of the predetermined region of the lead tab 100.

For example, the area of the concavo-convex patterns 120 range from 10% to 95% of the total area of the predetermined region of the lead tab, but is not limited thereto.

Furthermore, when the concavo-convex patterns 120 are formed, a plurality of concavo-convex patterns may be formed in the predetermined region of the lead tab 100, such that the concavo-convex patterns adjacent to each other have a uniform spacing therebetween.

In some cases, when the concavo-convex patterns 120 are formed, a plurality of concavo-convex patterns is formed in the predetermined region of the lead tab 100, such that the concavo-convex patterns adjacent to each other have a non-uniform spacing therebetween.

For example, the concavo-convex patterns 120 are formed so that the spacings between the respective concavo-convex patterns adjacent to each other gradually decrease from the central region toward the edge region in the predetermined region of the lead tab 100.

Furthermore, when the lead tab 100 for a positive electrode is formed of a single metal layer, the concavo-convex patterns 120 are formed on the surface of the single metal layer.

For example, the lead tab 100 may be formed of an Al layer, and the concavo-convex patterns 120 may be formed on the surface of the Al layer.

When the lead tab 100 for a negative electrode is composed of a first metal layer and a second metal layer plated on the surface of the first metal layer, the concavo-convex patterns 120 are formed on the surface of the second metal layer.

In this case, the second metal layer includes a second metal layer plated on the top surface of the first metal layer and a second metal layer plated on the bottom surface of the first metal layer.

For example, the lead tab 100 may be composed of a Cu layer and a Ni layer plated on the surface of the Cu layer, and the concavo-convex patterns 120 may be formed on the surface of the Ni layer.

The depth of the concavo-convex patterns 120 may be equal to or smaller than the thickness of the second metal layer.

In some cases, the depth of the concavo-convex patterns 120 may be equal to or larger than the thickness of the second metal layer.

Subsequently, according to the present disclosure, the concavo-convex patterns 120 are coated with a coating solution.

In an embodiment, when the concavo-convex patterns 120 are coated with a coating solution, the lead tab 100 having the concavo-convex patterns 120 formed thereon may be dipped into the coating solution, such that the concavo-convex patterns 120 are coated with the coating solution.

In another embodiment, when the concavo-convex patterns 120 are coated with a coating solution, a sprayer may be used to spray the coating solution onto the region where the concavo-convex patterns 120 are formed, such that the concavo-convex patterns 120 are coated with the coating solution.

In still another embodiment, when the concavo-convex patterns 120 are coated with a coating solution, a brush may be used to apply the coating solution onto the region where the concavo-convex patterns 120 are formed, such that the concavo-convex patterns 120 are coated with the coating solution.

After the concavo-convex patterns 120 are coated with the coating solution, the lead tab 100 may be dried for a predetermined time.

According to the present disclosure, the lead tab 100 may be cut into preset sizes before the concavo-convex patterns 120 are formed.

In some cases, the lead tab 100 may be cut into preset sizes, before the coating solution is applied after the concavo-convex patterns 120 are formed.

In another case, after the concavo-convex patterns 120 are coated with the coating solution, the lead tab 100 may be cut in a preset size.

In this case, when the lead tab 100 is cut in the preset size, the cutting position of the lead tab 100 may be scanned and decided on the basis of the concavo-convex patterns 120, and the lead tab 100 may be cut on the basis of the decided cutting position.

Then, the insulating film 130 is bonded onto the concavo-convex patterns 120 coated with the coating solution.

According to the present disclosure, the plurality of concavo-convex patterns for increasing the surface area of the lead tab may be formed by treating the surface of the lead tab, to which the insulating film is bonded or fused, with laser light, and thus improve the fusion performance between the lead tab and the insulating film without using a chemical, which makes it possible to minimize the environmental pollution and the defect rate while raising the productivity.

Furthermore, the laser-etched patterns may be formed on the surface of the processing area of the lead tab to which the insulating film is fused or bonded, in order to increase the surface area of the fused or bonded surface of the lead tab. Thus, it is possible to improve the fusion or bonding performance between the insulating film and the processing region of the lead tab.

Furthermore, when the insulating films are fused or bonded, bubbles formed at the interfaces between the insulating films and the processing area of the lead tab may be discharged to the outside through the laser-etched patterns, which makes it possible to prevent the bubbles from being contained in the interfaces.

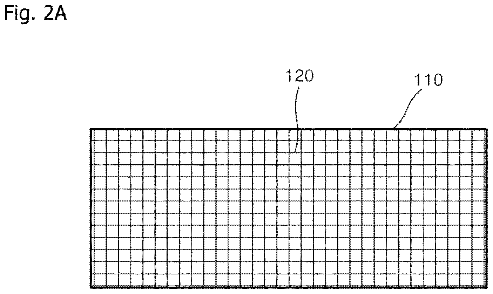

FIGS. 2A to 2C are diagrams for describing laser-etched patterns according to the present disclosure.

As illustrated in each of FIGS. 2A to 2C, the lead tab according to the present disclosure have a plurality of concavo-convex patterns 120 formed on the surface of a metal plate 110.

The plurality of concavo-convex patterns 120 is formed through a surface treatment of applying predetermined external energy such as laser light onto the surface of the metal plate 110.

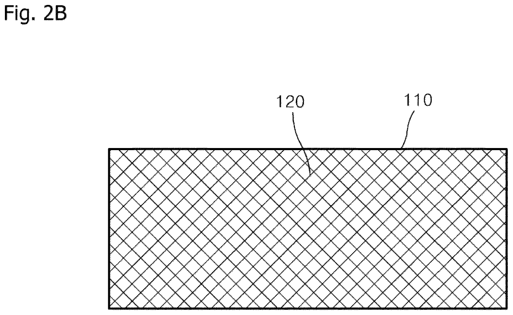

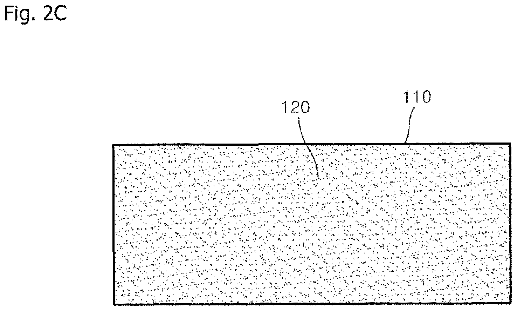

The concavo-convex patterns 120 may be formed as line patterns as illustrated in FIG. 2A, formed as lattice patterns as illustrated in FIG. 2B, or formed as dot patterns as illustrated in FIG. 2C.

In some cases, the concavo-convex patterns 120 may be formed as a pattern combination including dot patterns, line patterns, and lattice patterns.

The spacing between the concavo-convex patterns 120 adjacent to each other may range from about 0.001 mm to about 0.5 mm, the etching depth of the concavo-convex patterns 120 may range from about 1% to about 80% of the total thickness of the metal plate 110, and the area of the concavo-convex patterns 120 may range from about 10% to about 95% of the total area of the metal plate 110. However, the present disclosure is not limited thereto.

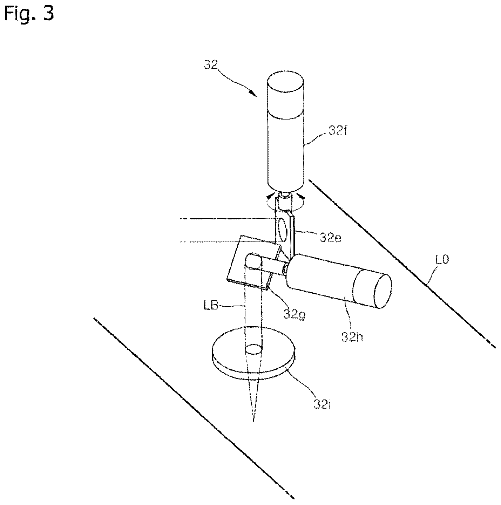

FIG. 3 is a diagram for describing a laser etching device for forming the concavo-convex patterns according to the present disclosure.

A laser etching device may be installed between a supply unit and a cutting unit so as to perform a laser etched pattern formation process on a lead tab material roll LO.

In some cases, the laser etching device may be installed between the cutting unit and a loading box so as to perform a laser marking process on a lead tab.

The laser etching device is configured to laser-mark laser etched patterns P on each of the top and bottom surfaces of the lead tab material roll LO.

For example, the laser etching device may include a first marking machine 32 for laser-marking the laser etched patterns on the top surface of a predetermined laser etched pattern processing area of the lead tab material roll LO, and a second marking machine for laser-marking the laser etched patterns on the bottom surface of the laser etched pattern processing area of the lead tab material roll LO.

The installation position of the first marking machine 32 is not specifically limited. For example, the first marking machine 32 may be installed to emit laser beam LB onto the lead tab material roll LO transferred from a feeding roller, or specifically the top surface of a predetermined laser etched pattern processing area of the lead tab material roll LO located between a first conveyer belt and a second conveyer belt.

The installation position of the second marking machine is not specifically limited. For example, the second marking machine may be installed to emit the laser beam LB onto the lead tab material roll LO having passed through the first marking machine 32, or specifically the bottom surface of a predetermined laser etched pattern processing area of the lead tab material roll LO located between the second conveyer belt and a third conveyer belt.

The first marking machine 32 may include a first laser oscillator configured to generate and oscillate the laser beam LB, a first laser scanner configured to emit the laser beam LB, transferred from the first laser oscillator, onto a predetermined scan area, a first scanner driver configured to reciprocate the first laser scanner in the widthwise direction of the lead tab material roll LO, and one or more first reflecting mirrors installed between the first laser oscillator and the first laser scanner and configured to transfer the laser beam LB oscillated by the first laser oscillator to the first laser scanner.

The second marking machine may include a second laser oscillator configured to generate and oscillate the laser beam LB, a second laser scanner configured to emit the laser beam LB, transferred from the second laser oscillator, onto the predetermined scan area, a second scanner driver configured to reciprocate the second laser scanner in the widthwise direction of the lead tab material roll LO, and one or more second reflecting mirrors installed between the second laser oscillator and the second laser scanner and configured to transfer the laser beam LB oscillated by the second laser oscillator to the second laser scanner.

The first marking machine 32 and the second marking machine have the same structure except the locations onto which the first and second marking machines emit the laser beam LB. Thus, hereafter, the first marking machine 32 will be taken as an example for describing the structures of the marking machines.

The first laser oscillator generates and oscillates the laser beam LB capable of laser-processing the lead tab material roll LO. For example, when the lead tab material roll LO is made of synthetic resin, the first laser oscillator may generate and oscillate CO₂ laser beam LB having a wavelength of 9.3 µm or 10.6 µm.

The first laser scanner is configured to adjust an optical path of the laser beam LB transferred through the first reflecting mirror from the first laser oscillator 32a, such that the laser beam LB can be emitted onto the predetermined scan area As. For example, as illustrated in FIG. 3, the first laser scanner may include an X-axis mirror 32e and a Y-axis mirror 32g. The X-axis mirror 32e may be driven by an X-axis servo motor 32f, and may be configured to change the optical path of the laser beam LB in the widthwise direction, and the Y-axis mirror 32g may be driven by a Y-axis servo motor 32h, and may be configured to change the optical path of the laser beam LB in the longitudinal direction. The laser beam LB whose optical path has been changed by the X-axis mirror 32e and the Y-axis mirror 32g may be concentrated by a lens 32i included in the first laser scanner, and emitted onto the lead tab material roll LO. The lens 32i may be an f-theta (θ) lens, but is not limited thereto.

The laser etched pattern processing area is one area of the lead tab material roll LO, on which a surface treatment is to be performed through the laser marking process, and is set to the position where an insulating film F for sealing the interface between the lead tab and a battery case is fused. Such a processing area may be set with a predetermined reference spacing on the lead tab material roll LO, such that each of the lead tabs divided from the lead tab material roll LO by a cutting unit includes the laser etched patterns. The reference spacing is not specifically limited. For example, the reference spacing may correspond to the length L of the lead tab.

The lead tab having the concavo-convex patterns according to the present disclosure may be applied to a pouch-type secondary battery.

The pouch-type secondary battery may include a battery case serving as a pouch-type exterior material, an electrode assembly housed in the battery case, a lead tab electrically connected to electrode tabs of electrodes included in the electrode assembly and extended to the outside of the battery case, and an insulating film configured to electrically insulate the lead tab.

In particular, the insulating film may have one surface fused to the lead tab and the other surface corresponding to the opposite surface of the one surface and fused to a battery case, and may perform a function of sealing the interface between the lead tab and the battery case serving as a pouch-type exterior material.

The lead tab may be made of a metallic material such as aluminum (Al) or copper (Cu), the insulating film may be made of synthetic resin such as polypropylene, and the battery case serving as a pouch-type exterior material may be made of synthetic resin and may include a synthetic resin layer fused to the insulating film.

Therefore, the concavo-convex patterns of the lead tab according to the present disclosure increase the bonding and fusion area with the insulating film, thereby improving the fusion or bonding performance between the insulating film and the lead tab.

According to the present disclosure, the plurality of concavo-convex patterns for increasing the surface area of the lead tab is formed by treating the surface of the lead tab, to which the insulating film is bonded or fused, with laser light, and thus improve the fusion performance between the lead tab and the insulating film without using a chemical, which makes it possible to minimize the environmental pollution and the defect rate while raising the productivity.

Furthermore, the laser-etched patterns may be formed on the surface of the processing area of the lead tab to which the insulating film is fused or bonded, in order to increase the surface area of the fused or bonded surface of the lead tab. Thus, it is possible to improve the fusion or bonding performance between the insulating film and the processing region of the lead tab.

Furthermore, when the insulating films are fused or bonded, bubbles formed at the interfaces between the insulating films and the processing area of the lead tab may be discharged to the outside through the laser-etched patterns, which makes it possible to prevent the bubbles from being contained in the interfaces.

## Claims

1. A method for fabricating a lead tab (100), comprising:
supplying a lead tab (100);
forming concavo-convex patterns (120) by emitting laser light onto a predetermined region of the lead tab (100);
coating the concavo-convex patterns (120) with a coating solution; and
bonding an insulating film (130) to the concavo-convex patterns (120) coated with the coating solution,
wherein the forming of the concavo-convex patterns (120) comprises forming first concavo-convex patterns by emitting first laser light onto a first region in a front surface of the lead tab (100), and forming second concavo-convex patterns by emitting second laser light having intensity different from that of the first laser light onto a second region in a rear surface of the lead tab (100),
wherein the first and second concavo-convex patterns are formed so that the spacings between the respective concavo-convex patterns (120) adjacent to each other gradually decrease from a central region toward either edge region in a predetermined region of the lead tab (100), while the depths of the concavo-convex patterns (120) gradually increase from the central region toward either edge region in the predetermined region of the lead tab (100),
an area occupied by the concavo-convex patterns (120) ranges from 10% to 95% of the entire area of the predetermined region of the lead tab (100),
the concavo-convex patterns (120) are formed with a depth ranging from 1% to 80% of the thickness of the lead tab (100),
an area occupied by the first concavo-convex patterns formed on the first region of the front surface of the lead tab (100) is different from an area occupied by the second concavo-convex patterns formed on the second region of the rear surface of the lead tab (100),
the first region in the front surface of the lead tab (100), in which the first concavo-convex patterns are formed, and the second region in the rear surface of the lead tab (100), in which the second concavo-convex patterns are formed, partially overlap each other, and
the predetermined region of the lead tab (100) is a region to which the insulating film (130) is bonded.

2. The method of claim 1, wherein the forming of the concavo-convex patterns (120) comprises forming the concavo-convex patterns (120) on the surface of a single metal layer, when the lead tab (100) is formed of the single metal layer.

3. The method of claim 1, wherein the forming of the concavo-convex patterns (120) comprises plating a second metal layer on the surface of a first metal layer, and then forming the concavo-convex patterns (120) on the surface of the second metal layer.

## Patentansprüche

1. Verfahren zur Herstellung einer Bleifahne (100), umfassend:
Zuführen einer Bleifahne (100);
Bilden konkav-konvexer Muster (120) durch Emittieren von Laserlicht auf einen vorgegebenen Bereich der Bleifahne (100);
Beschichten der konkav-konvexen Muster (120) mit einer Beschichtungslösung und
Bonden eines Isolierfilms (130) mit den konkav-konvexen Mustern (120), die mit der Beschichtungslösung beschichtet sind,
wobei das Bilden der konkav-konvexen Muster (120) Bilden erster konkav-konvexer Muster durch Emittieren eines ersten Laserlichts auf einen ersten Bereich auf einer Vorderseite der Bleifahne (100) und Bilden zweiter konkav-konvexer Muster durch Emittieren eines zweiten Laserlichts mit einer Intensität, die von jener des ersten Laserlichts verschieden ist, auf einen zweiten Bereich auf einer Rückseite der Bleifahne (100) umfasst,
wobei die ersten und zweiten konkav-konvexen Muster so gebildet sind, dass die Abstände zwischen den jeweiligen konkav-konvexen Mustern (120), die nebeneinander liegen, von einem Mittelbereich zu einem der Randbereiche in einem vorgegebenen Bereich der Bleifahne (100) allmählich abnehmen, während die Tiefen der konkav-konvexen Muster (120) von dem Mittelbereich zu einem der Randbereiche in dem vorgegebenen Bereich der Bleifahne (100) allmählich zunehmen,
eine Fläche, die von den konkav-konvexen Mustern (120) eingenommen wird, von 10 % bis 95 % der gesamten Fläche des vorgegebenen Bereichs der Bleifahne (100) reicht,
die konkav-konvexen Muster (120) mit einer Tiefe gebildet sind, die von 1 % bis 80 % der Dicke der Bleifahne (100) reicht,
eine Fläche, die von den ersten konkav-konvexen Mustern eingenommen wird, die auf dem ersten Bereich der Vorderseite der Bleifahne (100) gebildet sind, von einer Fläche verschieden ist, die von den zweiten konkav-konvexen Mustern eingenommen wird, die auf dem zweiten Bereich der Rückseite der Bleifahne (100) gebildet sind,
der erste Bereich auf der Vorderseite der Bleifahne (100), in dem die ersten konkav-konvexen Muster gebildet sind, und der zweite Bereich auf der Rückseite der Bleifahne (100), in dem die zweiten konkav-konvexen Muster gebildet sind, einander teilweise überlappen und
der vorgegebene Bereich der Bleifahne (100) ein Bereich ist, an den der Isolierfilm (130) gebondet ist.

2. Verfahren nach Anspruch 1, wobei das Bilden der konkav-konvexen Muster (120) Bilden der konkav-konvexen Muster (120) auf der Oberfläche einer einzelnen Metallschicht umfasst, wenn die Bleifahne (100) aus der einzelnen Metallschicht gebildet ist.

3. Verfahren nach Anspruch 1, wobei das Bilden der konkav-konvexen Muster (120) Plattieren einer zweiten Metallschicht auf der Oberfläche einer ersten Metallschicht und anschließendes Bilden der konkav-konvexen Muster (120) auf der Oberfläche der zweiten Metallschicht umfasst.

## Revendications

1. Procédé de fabrication d'une patte de connecteur (100), comprenant:
la fourniture d'une patte de conducteur (100);
la formation de motifs concavo-convexes (120) par émission de lumière laser sur une région prédéterminée de la patte de connecteur (100);
le revêtement des motifs concavo-convexes (120) d'une solution de revêtement; et
le collage d'un film isolant (130) sur les motifs concavo-convexes (120) revêtus de la solution de revêtement,
dans lequel la formation des motifs concavo-convexes (120) comprend la formation de premiers motifs concavo-convexes par émission d'une première lumière laser sur une première région de la surface avant de la patte de connecteur (100), et la formation de seconds motifs concavo-convexes par émission d'une seconde lumière laser ayant une intensité différente de celle de la première lumière laser sur une seconde région de la surface arrière de la patte de connecteur (100),
dans lequel les premier et second motifs concavo-convexes sont formés de telle sorte que les espaces entre les motifs concavo-convexes respectifs (120) adjacents les uns aux autres diminuent progressivement d'une région centrale vers l'une ou l'autre région terminale dans une région prédéterminée de la patte de connecteur (100), tandis que les profondeurs des motifs concavo-convexes (120) augmentent progressivement de la région centrale vers l'une ou l'autre région terminale dans la région prédéterminée de la patte de connecteur (100),
une zone occupée par les motifs concavo-convexes (120) est comprise entre 10 % et 95 % de la zone totale de la région prédéterminée de la patte de connecteur (100),
les motifs concavo-convexes (120) sont pourvus d'une profondeur allant de 1 % à 80 % de l'épaisseur de la patte de connecteur (100),
une zone occupée par les premiers motifs concavo-convexes formés sur la première région de la surface avant de la patte de connecteur (100) est différente d'une zone occupée par les seconds motifs concavo-convexes formés sur la seconde région de la surface arrière de la patte de connecteur (100),
la première région de la surface avant de la patte de connecteur (100), dans laquelle sont formés les premiers motifs concavo-convexes, et la seconde région de la surface arrière de la patte de connecteur (100), dans laquelle sont formés les seconds motifs concavo-convexes, se chevauchent partiellement, et
la région prédéterminée de la patte de connecteur (100) est une région à laquelle est collé le film isolant (130).

2. Procédé selon la revendication 1, dans lequel la formation des motifs concavo-convexes (120) comprend la formation des motifs concavo-convexes (120) sur la surface d'une seule couche métallique, lorsque la patte de connecteur (100) est formée d'une seule couche métallique.

3. Procédé selon la revendication 1, dans lequel la formation des motifs concavo-convexes (120) comprend le placage d'une seconde couche métallique sur la surface d'une première couche métallique, puis la formation des motifs concavo-convexes (120) sur la surface de la seconde couche métallique.
